# FASCICULE DE BREVET EUROPEEN

(11) **EP 3 032 451 B1**
(45) Date de publication et mention de la délivrance du brevet: **22.07.2020**
(21) Numéro de dépôt: 15306980.2
(22) Date de dépôt: 10.12.2015
(51) Int. Cl.: G06F 21/54, G06F 21/55

(54) **PROCÉDÉ D'EXÉCUTION D'UN PROGRAMME PAR UN PROCESSEUR ET ENTITÉ ÉLECTRONIQUE COMPORTANT UN TEL PROCESSEUR**
VERFAHREN ZUR AUSFÜHRUNG EINES PROGRAMMS ÜBER EINEN PROZESSOR, UND ELEKTRONISCHE EINHEIT, DIE EINEN SOLCHEN PROZESSOR UMFASST
METHOD FOR RUNNING A PROGRAM BY A PROCESSOR AND ELECTRONIC ENTITY COMPRISING SUCH A PROCESSOR

(30) Priorité: 12.12.2014 FR 1462355
(43) Date de publication de la demande: 15.06.2016
(73) Titulaire: IDEMIA France, 92400 Courbevoie (FR)
(72) Inventeur: CHAMLEY, Olivier, 92700 Colombes (FR); GIRAUD, Christophe, 92700 Colombes (FR)
(74) Mandataire: Jacobacci Coralis Harle

(56) Documents cités:
- EP-A1- 1 538 509
- EP-A1- 1 739 519

## Description

### DOMAINE TECHNIQUE AUQUEL SE RAPPORTE L'INVENTION

La présente invention concerne la protection contre les attaques par injection de fautes.

Elle concerne plus particulièrement un procédé d'exécution d'un programme par un processeur et une entité électronique comportant un tel processeur.

L'invention s'applique particulièrement avantageusement dans le cas où un tel programme fait appel à un sous-programme avec passage de données en paramètres.

### ARRIERE-PLAN TECHNOLOGIQUE

Lors de l'exécution d'un programme (dénommé dans la suite "*programme appelant*") par un processeur, il est courant qu'une au moins des instructions du programme fasse appel à un sous-programme (ou fonction appelée) pour mettre en œuvre certaines fonctionnalités (en général des traitements de données) prévues dans ce sous-programme.

L'appel au sous-programme se fait en général avec passage de données en paramètres, technique qui permet au programme appelant de communiquer les données à traiter au sous-programme.

Le passage de paramètre est toutefois la cible particulière d'attaques par injection de fautes. En effet, des modifications des données passées en paramètre (du fait par exemple d'une perturbation physique du processeur par un attaquant) ne sont détectables ni par le programme appelant (qui émet les données correctes), ni par le sous-programme (qui n'a connaissance que des données modifiées).

Pour lutter contre ce type d'attaque, il a déjà été proposé, par exemple dans le document EP 1 739 519, que le sous-programme produise un résultat supplémentaire dépendant des données reçues et renvoie ce résultat supplémentaire au programme appelant dans le but de vérifier l'intégrité des données traitées.

### OBJET DE L'INVENTION

Dans ce contexte, la présente invention propose un procédé d'exécution d'un programme par un processeur, comprenant les étapes suivantes :
- appel, par un programme appelant, d'un sous-programme avec passage d'au moins un paramètre ;
- détermination, par le sous-programme, d'un indicateur d'état de retour ;
- détermination, par le sous-programme, d'un mot de retour en combinant au moins, au moyen d'une fonction prédéterminée, l'indicateur d'état de retour et le paramètre ;
- retour au programme appelant avec pour résultat le mot de retour déterminé ;
- comparaison, par le programme appelant, du mot de retour et d'un mot déterminé en combinant au moins, au moyen de la fonction prédéterminée, une valeur possible de l'indicateur d'état de retour et le paramètre passé lors de l'appel du sous-programme.

Selon des caractéristiques optionnelles (et donc non limitatives) envisageables :
- ladite valeur possible est indicative d'un fonctionnement normal, auquel cas une étape de traitement d'attaque est par exemple mise en œuvre si une différence entre le mot de retour et ledit mot déterminé est détectée à l'étape de comparaison ;
- le traitement d'attaque comprend une étape d'écriture de données de blocage dans une mémoire non-volatile réinscriptible associée au processeur ;
- ladite valeur possible est indicative d'une erreur de fonctionnement, auquel cas une étape de traitement d'erreur peut être mise en œuvre si le mot de retour et ledit mot déterminé sont égaux à l'étape de comparaison ;
- le paramètre est une adresse de mémorisation d'une donnée utilisée par le sous-programme ;
- le processeur effectue, du fait de l'exécution d'instructions du sous-programme, un traitement de données utilisant le paramètre ;
- le traitement desdites données comprend l'application d'un algorithme cryptographique auxdites données.

L'invention propose également une entité électronique comportant un processeur et une mémoire dans laquelle est mémorisé un programme apte à mettre en œuvre un procédé tel que proposé ci-dessus lorsque le programme est exécuté par le processeur.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments principaux d'une entité électronique au sein de laquelle est mise en œuvre l'invention ;
- la figure 2 représente les étapes principales d'un procédé mis en œuvre par l'entité électronique du fait de l'exécution d'instructions de programme par un microprocesseur de l'entité électronique.

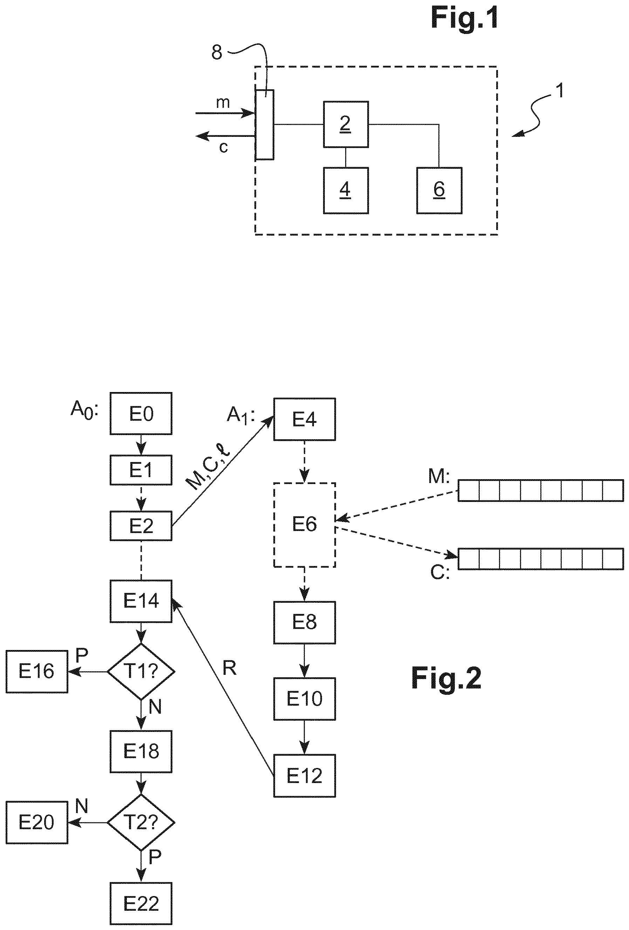

La figure 1 représente schématiquement les éléments principaux d'une entité électronique 1 au sein de laquelle est mise en œuvre l'invention. Cette entité électronique est par exemple un module électronique, tel qu'une carte à microcircuit ou un élément sécurisé (ou SE pour *"Secure Element*") - par exemple un microcontrôleur sécurisé. En variante, il pourrait s'agir d'un dispositif électronique portatif (ou "*hand-held electronic device*" selon l'appellation anglo-saxonne), tel qu'un terminal de communication ou un passeport électronique, ou d'un ordinateur.

L'entité électronique 1 comprend un processeur (ici un microprocesseur 2), une mémoire vive 4 et une mémoire non-volatile réinscriptible 6 (par exemple de type EEPROM pour "*Electrically Erasable and Programmable Read-Only Memory*"). L'entité électronique 1 pourrait éventuellement comprendre en outre une mémoire morte. La mémoire vive 4 et la mémoire non-volatile réinscriptible 6 (ainsi que le cas échéant la mémoire morte) sont chacune liées au microprocesseur 2 de sorte que le microprocesseur 2 peut lire ou écrire des données dans chacune de ces mémoires.

Une de ces mémoires, par exemple la mémoire non-volatile réinscriptible 6, mémorise des instructions de programme d'ordinateur qui permettent la mise en œuvre du procédé décrit ci-dessous en référence à la figure 2 lorsque ces instructions sont exécutées par le microprocesseur 2.

On prévoit par exemple que ces instructions soient mémorisées dans la mémoire non-volatile réinscriptible 6 (afin d'y être conservées même lorsque l'entité électronique n'est pas alimentée électriquement), puis chargées dans la mémoire vive 4 (par exemple lors d'une phase d'initialisation mise en œuvre au démarrage du fonctionnement de l'entité électronique) afin d'être exécutées par le microprocesseur 2.

Ainsi, comme cela est schématiquement représenté en figure 2, on prévoit lors du fonctionnement de l'entité électronique 1 qu'un programme appelant (ou fonction appelante) soit mémorisé dans la mémoire vive 4 à partir d'une adresse A₀ dans la mémoire vive et qu'un sous-programme (ou fonction appelée) soit mémorisé à partir d'une adresse A₁ dans la mémoire vive 4.

Les mémoires 4,6 mémorisent également des données utilisées lors de la mise en œuvre de procédés de traitement de données par le microprocesseur 2, par exemple lors de la mise en œuvre du procédé décrit ci-dessous en référence à la figure 2.

Par exemple, la mémoire non-volatile réinscriptible 6 mémorise une clé cryptographique utilisée ici pour le chiffrement d'un message, comme expliqué ci-après. Par ailleurs, comme également expliqué plus loin, la mémoire vive 4 mémorise des données traitées ou produites au cours des procédés décrits ci-dessous, notamment un message m (mémorisé à une adresse M dans la mémoire vive 4) et une version chiffrée c du message m (version chiffrée c mémorisée à une adresse C dans la mémoire vive 4).

L'entité électronique 1 peut comprendre en outre une interface de communication 8 avec des dispositifs électroniques externes. Dans le cas décrit ici où l'entité électronique 1 est une carte à microcircuit, l'interface de communication 8 comprend par exemple des contacts affleurant sur une face de la carte à microcircuit. En variante, l'interface de communication 8 pourrait être réalisée par un module de communication sans contact. De manière générale, l'interface de communication 8 peut être un module de communication (filaire ou sans fil) avec une autre entité électronique.

Le microprocesseur 2 peut ainsi recevoir des données (par exemple un message m) de l'autre entité électronique via l'interface de communication 8 et émettre en réponse des données (par exemple une version chiffrée c du message m) à l'autre entité électronique via l'interface de communication 8.

La figure 2 représente les étapes principales d'un procédé mis en œuvre par l'entité électronique 1 du fait de l'exécution d'instructions de programme par le microprocesseur 2.

Ce procédé débute à l'étape E0 par la réception d'un message m via l'interface de communication 8 en provenance d'une autre entité électronique, tel qu'un lecteur de carte à microcircuit.

Comme schématiquement représenté en figure 2, l'étape E0 est mise en œuvre du fait de l'exécution par le microprocesseur 2 d'instructions du programme appelant déjà mentionné, mémorisé dans la mémoire vive à l'adresse A₀. Ces instructions comprennent par exemple une boucle d'attente (parfois dénommée *"idle loop*") d'une commande, par exemple conforme à la norme ISO7816, en provenance de l'autre entité électronique.

Une fois le message reçu, il est mémorisé dans la mémoire vive 4 à une adresse M, comme déjà mentionné (étape E1).

Après des prétraitements éventuels (non représentés), le microprocesseur 2 effectue ensuite à l'étape E2 un appel au sous-programme déjà mentionné, du fait de l'exécution par le microprocesseur 2 d'une instruction correspondante du programme appelant (instruction d'appel).

Cet appel au sous-programme se fait avec passage de paramètres, ici l'adresse M de mémorisation du message reçu m, une adresse C à utiliser par le sous-programme pour mémoriser la version chiffrée c du message m et la longueur l (par exemple en octets) du message m.

À titre d'exemple, une telle instruction d'appel correspond en langage C à un appel à une fonction du type :

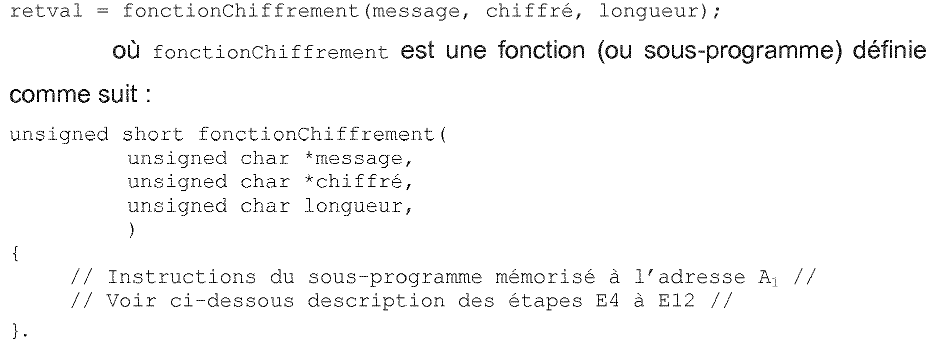

Du fait de l'appel au sous-programme mémorisé à l'adresse A₁, le microprocesseur 2 exécute à l'étape E4 les instructions du sous-programme mémorisées à partir de l'adresse A₁.

L'exécution de certaines instructions du sous-programme permettent notamment la mise en œuvre d'une étape E6 de traitement des données reçues (ici du message reçu m) au moyen d'un algorithme cryptographique (ici un algorithme de chiffrement utilisant la clé cryptographique mémorisée comme déjà indiqué dans la mémoire non-volatile réinscriptible 6).

Comme schématiquement représenté en figure 2, l'étape E6 effectue notamment (du fait de l'exécution par le microprocesseur 2 d'instructions du sous-programme mémorisé à l'adresse A₁) des opérations de lecture d'une partie au moins du message m mémorisé à l'adresse M (reçue en paramètre) avec une longueur l (reçue en paramètre), des opérations de calcul cryptographique utilisant la partie lue et une partie au moins de la clé cryptographique, et des opérations d'écriture d'une partie au moins de la version chiffrée c du message (ou message chiffré) mémorisée à l'adresse C (également reçue en paramètre).

Le microprocesseur 2 détermine par ailleurs à l'étape E8 (ici encore du fait de l'exécution d'instructions du sous-programme) un indicateur d'état de retour représentatif de l'état de retour (en anglais *"return status"*) du sous-programme.

Un tel indicateur d'état de retour est par exemple déterminé sur la base des données traitées lors des étapes précédentes, notamment lors de l'étape E6, et/ou en vérifiant certains aspects du fonctionnement de l'entité électronique 1. En fonction de sa valeur, l'indicateur d'état de retour peut indiquer un déroulement correct du sous-programme ou une erreur dans le déroulement du sous-programme, avec indication éventuelle dans ce cas d'un code d'erreur.

Du fait de l'exécution d'instructions du sous-programme, le microprocesseur 2 détermine ensuite à l'étape E10 un mot de retour R en combinant, au moyen d'une fonction prédéterminée, l'indicateur d'état de retour et certaines au moins des données passées en paramètre, ici toutes les données passées en paramètres, à savoir l'adresse M de mémorisation du message m, l'adresse C de mémorisation de la version chiffrée c et la longueur l du message m.

Dans l'exemple décrit ici, le mot de retour est la somme de ces différents éléments, à savoir la somme de l'indicateur d'état de retour et des données passées en paramètres, c'est-à-dire la somme de l'indicateur d'état de retour, de l'adresse M de mémorisation du message m, de l'adresse C de mémorisation de la version chiffrée c et de la longueur l du message m.

En variante, la fonction prédéterminée utilisée pour combiner l'indicateur d'état de retour et certaines au moins des données passées en paramètre pourrait utiliser d'autres types d'opérateur que l'addition, par exemple la soustraction, une opération de "*ou exclusif*" (parfois dénommé XOR ou somme booléenne) ou une fonction de hachage.

Le microprocesseur exécute à l'étape E12 une instruction de retour au programme appelant, en retournant le mot de retour R. Une telle instruction de retour termine le sous-programme (c'est-à-dire constitue la dernière instruction du sous-programme) et provoque l'exécution par le microprocesseur 2 de l'instruction du programme appelant qui suit immédiatement l'instruction d'appel (voir l'étape E2 ci-dessus), c'est-à-dire l'exécution de l'instruction mémorisée dans la mémoire vive 4 immédiatement après l'instruction d'appel, ce qui débute la mise en œuvre de l'étape E14 décrite ci-dessous.

Sur la figure 2, les étapes E6, E8, E10 et E12 sont représentées comme des étapes séparées pour clarifier l'exposé. On remarque toutefois qu'en pratique certaines étapes pourraient être regroupées ou réalisées en parallèle.

Dans le cadre de l'exemple en langage C donné ci-dessus, les étapes E10 et E12 pourraient par exemple être réalisées au moyen de la ligne suivante, placée à la fin de la fonction fonctionChiffrement introduite ci-dessus :
return ((unsigned short)((unsigned short) message + (unsigned short) chiffré + longueur + status))
où status est l'indicateur d'état de retour déterminé à l'étape E8.

Lors de l'étape E14, le microprocesseur 2 détermine, du fait de la reprise de l'exécution du programme appelant, une première valeur de comparaison V₁ en combinant, au moyen de la fonction prédéterminée, une valeur d'erreur de l'indicateur d'état de retour et celles des données passées en paramètre utilisées pour la détermination du mot de retour R à l'étape E10, soit ici toutes les données passées en paramètres, à savoir l'adresse M de mémorisation du message m, l'adresse C de mémorisation de la version chiffrée c et la longueur l du message m.

On remarque que l'étape E14 est mise en œuvre comme déjà indiqué par le programme appelant et que les données utilisées pour le calcul de la première valeur de comparaison V₁ sont par conséquent celles passées en paramètre par le programme appelant lors de l'appel de l'étape E2 ; elles peuvent donc différer des valeurs reçues par passage en paramètre par le sous-programme, notamment lors d'une attaque par injection de fautes lors de l'appel.

Le microprocesseur 2 procède alors à un test T1 d'égalité entre le mot de retour R retourné par le sous-programme à l'étape E12 et la première valeur de comparaison V₁ déterminée à l'étape E14.

Lorsque le passage de paramètres s'est correctement effectué à l'étape E2, le test d'égalité T1 est positif lorsque l'indicateur d'état de retour déterminé à l'étape E8 a la valeur d'erreur utilisée dans le calcul de la première valeur de comparaison V₁ à l'étape E14. (Le cas d'un problème dans le passage de paramètres est détecté ci-dessous par le test T2.)

Ainsi, lorsque le test d'égalité T1 a un résultat positif (flèche P), on procède à l'étape E16 au traitement de l'erreur signalée par la valeur d'erreur utilisée dans le calcul de la première valeur de comparaison V₁ à l'étape E14. Une telle erreur peut par exemple être une impossibilité pour le sous-programme de lire et/ou d'écrire dans la mémoire vive 4 (au cours de l'étape E6) ; le traitement de l'erreur est par exemple dans ce cas l'émission, via l'interface de communication 8, d'un message d'erreur destiné à l'autre entité électronique (lecteur).

Lorsque le test d'égalité T2 a un résultat négatif (flèche N), le microprocesseur 2 détermine à l'étape E18 une seconde valeur de comparaison V₂ en combinant, au moyen de la fonction prédéterminée, une valeur de l'indicateur d'état de retour indicative du fonctionnement normal (souvent désignée valeur "*ok*") et celles des données passées en paramètre utilisées pour la détermination du mot de retour R à l'étape E10, soit ici toutes les données passées en paramètres, à savoir l'adresse M de mémorisation du message m, l'adresse C de mémorisation de la version chiffrée c et la longueur l du message m.

Comme déjà indiqué pour l'étape E14, l'étape E16 est mise en œuvre par le programme appelant et les données utilisées pour le calcul de la seconde valeur de comparaison V₂ sont par conséquent celles passées en paramètre par le programme appelant lors de l'appel de l'étape E2 ; elles peuvent donc différer des valeurs reçues par passage en paramètre par le sous-programme, notamment lors d'une attaque par injection de fautes lors de l'appel.

Le microprocesseur 2 procède alors à un test T2 d'égalité entre le mot de retour R retourné par le sous-programme à l'étape E12 et la seconde valeur de comparaison V₂ déterminée à l'étape E18.

Lorsque le passage de paramètres s'est correctement effectué à l'étape E2 et que l'indicateur d'état de retour déterminé à l'étape E8 a la valeur indicative du fonctionnement normal, le mot de retour R et la seconde valeur de comparaison V₂ sont égales puisqu'elles ont été déterminées au moyen de la même fonction prédéterminée et sur la base des mêmes données.

Ainsi, si le test d'égalité T2 a un résultat positif (flèche P), aucun problème n'est détecté et on peut procéder à l'étape E22 à l'émission de la version chiffrée c du message m, via l'interface de communication 8 et à destination de l'autre entité électronique (ici un lecteur de carte à microcircuit).

En revanche, si le test d'égalité T2 a un résultat négatif (flèche N), ceci indique soit que le passage de paramètres ne s'est pas correctement effectué (les données utilisées pour le calcul du mot de retour R à l'étape E10 différant au moins partiellement des données correspondantes utilisées dans le programme appelant), soit que l'indicateur d'état de retour déterminé à l'étape E8 a une valeur distincte de celle du fonctionnement normal (et ici distincte en outre de la valeur d'erreur utilisée à l'étape E14).

Il existe donc dans ce cas une possibilité qu'une attaque se soit produite pour perturber le passage de paramètres à l'étape E2 et le procédé se poursuit par conséquent, dans le cas d'un résultat négatif au test d'égalité T2, par une étape E20 de traitement d'attaque.

Le traitement d'attaque de l'étape E20 comprend par exemple l'écriture de données de blocage (parfois dénommées "*verrou*") dans la mémoire non-volatile réinscriptible 6 et/ou l'effacement d'une partie au moins de la mémoire non-volatile et/ou la réinitialisation du microprocesseur 2. L'entité électronique 1 est par exemple conçue de manière à consulter la mémoire non-volatile réinscriptible 6 lors de chaque réinitialisation du microprocesseur 2 et à interrompre son fonctionnement en présence desdites données de blocage (en général à un emplacement prédéterminé) dans la mémoire non-volatile réinscriptible 6.

En variante, le traitement d'attaque E20 peut comprendre l'écriture d'un drapeau en mémoire non-volatile réinscriptible 6 et/ou la modification d'une valeur mémorisée en mémoire non-volatile réinscriptible 6. L'entité électronique 1 peut alors être conçue de manière à consulter ce drapeau ou cette valeur et, sous certaines conditions (par exemple le dépassement d'un seuil par la valeur précitée), à écrire en mémoire non-volatile réinscriptible 6 des données de blocage telles que celles mentionnées ci-dessus.

Dans le cadre de l'exemple de programme en langage C donné ci-dessus, l'étape E18, le test T2 et l'étape E20 correspondent par exemple à des instructions comme suit dans le programme appelant :

```
 if(retval != (unsigned short)((unsigned short) message
             + (unsigned short) chiffré + longueur + OK))
             securityAction();
```

où retval est le mot de retour R déterminé par appel à la fonction fonctionchiffrement comme expliqué plus haut (voir l'étape E2), OK est la valeur de l'indicateur de fonctionnement indicative du fonctionnement normal et securityAction () est une fonction de traitement d'attaque, telle que celle décrite ci-dessus (étape E20).

Comme expliqué ci-dessus, le test T1 permet de vérifier si l'indicateur d'état de retour déterminé par le sous-programme à l'étape E8 avait une certaine valeur d'erreur (valeur utilisée à l'étape E14) afin d'effectuer un traitement spécifique pour ce type d'erreur. Le test T2 permet principalement de détecter un problème lors du passage de paramètres à l'étape E2.

Selon une variante envisageable, plusieurs valeurs de comparaison peuvent être calculées comme à l'étape E14, mais en utilisant à chaque fois une valeur d'erreur différente de l'indicateur d'état de retour, et des tests d'égalité correspondants peuvent être mis en œuvre afin d'effectuer un traitement d'erreur spécifique pour chaque type d'erreur associé à une valeur d'erreur.

Selon une autre variante envisageable, les étapes E14 et E16 et le test T1 ne sont pas mis en œuvre. On procède dans ce cas directement à l'étape E18 lors du retour au programme appelant. Selon cette variante, on procède à l'étape de traitement d'attaque E20 dès lors que les données n'ont pas été correctement passées en paramètre à l'étape E2 ou que l'indicateur d'état de retour n'est pas indicatif du fonctionnement normal. Autrement dit, dans ce cas, le traitement des attaques et des erreurs n'est pas différencié.

## Revendications

1. Procédé d'exécution d'un programme par un processeur (2), comprenant les étapes suivantes :
- appel (E2), par un programme appelant (A₀), d'un sous-programme (A₁) avec passage d'au moins un paramètre (M ; C ; I) ;
- détermination (E8), par le sous-programme (A₁), d'un indicateur d'état de retour ;
- détermination (E10), par le sous-programme (A₁), d'un mot de retour (R) en combinant au moins, au moyen d'une fonction prédéterminée, l'indicateur d'état de retour et le paramètre (M ; C ; I) ;
- retour (E12) au programme appelant (A₀) avec pour résultat le mot de retour déterminé (R) ;
- comparaison (T1 ; T2), par le programme appelant (A₀), du mot de retour (R) et d'un mot déterminé en combinant au moins, au moyen de la fonction prédéterminée, une valeur possible de l'indicateur d'état de retour et le paramètre (M ; C ; I) passé lors de l'appel (E2) du sous-programme (A₁).

2. Procédé selon la revendication 1, dans lequel ladite valeur possible est indicative d'un fonctionnement normal.

3. Procédé selon la revendication 2, dans lequel une étape de traitement d'attaque (E20) est mise en œuvre si une différence entre le mot de retour (R) et ledit mot déterminé est détectée à l'étape de comparaison (T2).

4. Procédé selon la revendication 3, dans lequel le traitement d'attaque (E20) comprend une étape d'écriture de données de blocage dans une mémoire non-volatile réinscriptible (6) associée au processeur (2).

5. Procédé selon la revendication 1, dans lequel ladite valeur possible est indicative d'une erreur de fonctionnement.

6. Procédé selon la revendication 5, dans lequel une étape de traitement d'erreur (E16) est mise en œuvre si le mot de retour (R) et ledit mot déterminé sont égaux à l'étape de comparaison (T1).

7. Procédé selon l'une des revendications 1 à 6, dans lequel le paramètre (M ; C) est une adresse de mémorisation d'une donnée (m ; c) utilisée par le sous-programme (A₁).

8. Procédé selon l'une des revendications 1 à 7, dans lequel le processeur (2) effectue, du fait de l'exécution d'instructions du sous-programme (A₁), un traitement de données (m) utilisant le paramètre (M ; C ; I).

9. Procédé selon la revendication 8, dans lequel le traitement desdites données (m) comprend l'application d'un algorithme cryptographique auxdites données (m).

10. Entité électronique (1) comportant un processeur (2) et une mémoire (4 ; 6) dans laquelle est mémorisé un programme apte à mettre en œuvre un procédé selon l'une des revendications 1 à 9 lorsque le programme est exécuté par le processeur.

## Patentansprüche

1. Verfahren zur Ausführung eines Programms durch einen Prozessor (2) mit den folgenden Schritten:
- Aufruf (E2) eines Unterprogramms (A₁) durch ein Aufrufprogramm (A₀) mit Weitergabe wenigstens eines Parameters (M; C; L);
- Bestimmung (E8) eines Rücklaufzustandsindikators durch das Unterprogramm (A₁);
- Bestimmung (E10) eines Rücklaufworts (R) durch das Unterprogramm (A₁), wobei mittels einer vorbestimmten Funktion wenigstens der Rücklaufzustandsindikator und der Parameter (M; C; I) kombiniert werden;
- Rücklauf (E12) zum Aufrufprogramm (A₀) mit dem bestimmten Rücklaufwort (R) als Ergebnis;
- Vergleich (T1; T2) des Rücklaufworts (R) durch das Aufrufprogramm (A₀) mit einem Wort, das durch Kombination wenigstens eines möglichen Werts des Rücklaufzustandsindikators mit dem beim Aufruf (E2) des Unterprogramms (A₁) weitergegebenen Parameter (M; C; L) mittels der vorbestimmten Funktion bestimmt worden ist.

2. Verfahren gemäß Anspruch 1, bei dem der mögliche Wert ein Anzeichen für ein normales Funktionieren ist.

3. Verfahren gemäß Anspruch 2, bei dem eine Angriffsbehandlung (E20) durchgeführt wird, wenn beim Vergleichsschritt (T2) ein Unterschied zwischen dem Rücklaufwort (R) und dem bestimmten Wort festgestellt worden ist.

4. Verfahren gemäß Anspruch 3, bei dem die Angriffsbehandlung (E20) einen Schritt des Einschreibens von Sperrdaten in einen mit dem Prozessor verbundenen nicht flüchtigen wiederbeschreibbaren Speicher (6) aufweist.

5. Verfahren gemäß Anspruch 1, bei dem der mögliche Wert ein Anzeichen für einen Funktionsfehler ist.

6. Verfahren gemäß Anspruch 5, bei dem eine Fehlerbehandlung (E16) durchgeführt wird, wenn das Rücklaufwort (R) und das bestimmte Wort beim Vergleichsschritt (T1) gleich sind.

7. Verfahren gemäß einem der Ansprüche 1 bis 6, bei dem der Parameter (M; C) eine Speicheradresse einer vom Unterprogramm (A₁) verwendeten Information (m; c) ist.

8. Verfahren gemäß einem der Ansprüche 1 bis 7, bei dem der Prozessor (2) aufgrund der Durchführung von Anweisungen des Unterprogramms (A₁) eine Verarbeitung von Daten (m) unter Verwendung des Parameters (M; C; I) durchführt.

9. Verfahren gemäß Anspruch 8, bei dem die Verarbeitung der Daten (m) die Anwendung eines kryptografischen Algorithmus auf die Daten (m) beinhaltet.

10. Elektronische Einheit (1), die einen Prozessor (2) und einen Speicher (4; 6), in dem ein Programm gespeichert ist, das dazu ausgelegt ist, ein Verfahren gemäß einem der Ansprüche 1 bis 9 auszuführen, wenn das Programm durch den Prozessor ausgeführt wird, aufweist.

## Claims

1. A method of executing a program by a processor (2), the method comprising the following steps:
- a calling program (A₀) calling (E2) a subprogram (A₁) and passing at least one parameter (M; C; I);
- the subprogram (A₁) determining (E8) a return status indicator;
- the subprogram (A₁) determining (E10) a return word (R) by using a predetermined function to combine at least the return status indicator and the parameter (M; C; I);
- returning (E12) to the calling program (A₀) with the determined return word (R) as a result; and
- the calling program (A₀) comparing (T₁; T₂) the return word (R) and a word determined by using the predetermined function to combine at least a possible value of the return status indicator and the parameter (M; C; I) passed when calling (E2) the subprogram (A₁).

2. A method according to claim 1, wherein said possible value is indicative of normal operation.

3. A method according to claim 2, wherein an attack processing step (E20) is performed if a difference is detected between the return word (R) and said determined word during the comparison step (T2).

4. A method according to claim 3, wherein the attack processing (E20) comprises a step of writing blocking data in a rewritable non-volatile memory (6) associated with the processor (2).

5. A method according to claim 1, wherein said possible value is indicative of an operation error.

6. A method according to claim 5, wherein an error processing step (E16) is performed if the return word (R) and said determined word are equal in the comparison step (T1).

7. A method according to any of claims 1-6, wherein the parameter (M; C) is an address for storing data (m; c) used by the subprogram (A₁).

8. A method according to any of claims 1-7, wherein, as a result of executing instructions of the subprogram (A₁), the processor (2) performs a processing of data (m) using the parameter (M; C; I).

9. A method according to claim 8, wherein the processing of said data (m) comprises applying a cryptographic algorithm to said data (m).

10. An electronic entity (1) comprising a processor (2) and a memory (4; 6) storing a program suitable for performing a method according to any of claims 1-9 when the program is executed by the processor.
